# EUROPÄISCHE PATENTSCHRIFT

(11) **EP 2 708 829 B1**
(45) Veröffentlichungstag und Bekanntmachung des Hinweises auf die Patenterteilung: **28.10.2020**
(21) Anmeldenummer: 13000036.7
(22) Anmeldetag: 04.01.2013
(51) Int. Cl.: F24F 5/00, F24F 12/00, F28F 27/02, F28D 9/00

(54) **Klimatisierung einer Schwimmhalle**
Air conditioning of an indoor swimming pool
Climatisation d'une piscine couverte

(30) Priorität: 12.09.2012 DE 102012017938
(43) Veröffentlichungstag der Anmeldung: 19.03.2014
(73) Patentinhaber: Menerga GmbH, 45472 Mülheim an der Ruhr (DE)
(72) Erfinder: Berger, Ralph, 45968 Gladbeck (DE)
(74) Vertreter: Cohausz Hannig Borkowski Wißgott

(56) Entgegenhaltungen:
- EP-A1- 1 731 846
- DE-A1-102009 033 157
- DE-U1- 29 909 013

## Beschreibung

Die Erfindung betrifft eine Vorrichtung zum Klimatisieren einer Schwimmhalle mit mindestens einem Luft/Luft-Wärmeübertrager, der dafür geeignet ist den Wärmeinhalt einer der Schwimmhalle entnommenen, in einem Abluftkanal geführten Abluft auf eine der Schwimmhalle zugeführte Außenluft zu übertragen, wobei von einem Abluftstrom vor dem Luft/Luft-Wärmeübertrager ein Abluft-Bypass abgezweigt ist, der in der Abluft hinter dem Luft/Luft-Wärmeübertrager mündet.

Der im Abluftvolumenstrom aus einer Schwimmhalle enthaltene theoretisch nutzbare Wärmeinhalt ist ca. doppelt so hoch wie die bei einer rekuperativen Wärmerückgewinnung von der Außenluft aufnehmbare Wärmemenge. Ursache dafür ist einerseits der hohe Anteil latenter Wärmeenergie (Luftfeuchte) als auch der gegenüber dem Außenluftvolumenstrom höhere Abluftvolumenstrom aufgrund des gewünschten Unterdruckes in der Schwimmhalle zur Vermeidung von Feuchteschäden am Mauerwerk und zur Vermeidung der Verbreitung von Schwimmbadluft in den angrenzenden Nebenräumen. Aus diesen Gründen wird trotz des Einsatzes eines bestmöglichen Wärmerückgewinnungssystems (mit theoretisch max. 100 % Rückwärmzahl) etwas 50 % der in der Abluft enthaltenen Wärmeenergie an die Umgebung abgegeben und geht damit als Lüftungswärmeverlust dem Gebäude bzw. der Schwimmhalle verloren.

Um diesen Lüftungswärmeverlust weiter zu minimieren besteht an sich die Möglichkeit, die überschüssige, in der Abluft enthaltene Wärmeenergie an das Beckenwasser einer Schwimmhalle abzugeben, da dieses durch die Wasserverdunstung und den damit verbundenen Wärmeverlust permanenten Wärmebedarf hat. Eine direkte Nutzung von 28°C warmen Beckenwasser ist jedoch ohne Nutzung einer Wärmepumpe nicht möglich, da die Temperaturdifferenz zur 30°C warmen Abluft zu gering ist.

Bekannt ist die Nutzung eines zusätzlich zum Luft/Luft-Plattenwärmeübertrager im Abluftsektor vor dem Eintritt in den Luft/Luft-Plattenwärmeübertrager installierten Luft/Wasser-Lamellenwärmeübertragers. Diese Lösung hat den Nachteil, dass die Abluft vor Eintritt in den Luft/Luft-Plattenwärmeübertrager gekühlt wird und dadurch die Wärmerückgewinnungsleistung des Luft/Luft-Plattenwärmeübertragers reduziert wird. Ebenfalls nachteilig ist der zusätzliche luftseitige Druckverlust des Luft/Wasser-Lamellenwärmeübertragers, der eine höher elektrische Aufnahmeleistung für den Antrieb des Ventilators erfordert.

Ebenfalls Stand der Technik ist die Nutzung eines zusätzlich zum Luft/Luft-Plattenwärmeübertrager im Fortluftsektor nach dem Austritt aus den Luft/Luft-Plattenwärmeübertrager installierten Luft/Wasser-Lamellenwärmeübertragers. Diese Lösung hat den Nachteil, dass die Abluft nach dem Austritt aus dem Luft/Luft-Plattenwärmeübertrager deutlich tiefere Temperaturen als 30°C hat und dadurch die übertragbare Wärmeleistung auf das 10 bis 15°C kalte Nachspeisewasser deutlich reduziert wird. Ebenfalls nachteilig ist der zusätzliche luftseitige Druckverlust des Luft/Wasser-Lamellenwärmeübertragers, der eine höhere elektrische Aufnahmeleistung für den Antrieb des Ventilators erfordert.

Schließlich ist aus der DE 299 09 013 U1 eine Wärmepumpenanlage mit einer Lüftungsanlage nach dem Oberbegriff des Anspruchs 1 bekannt, in der dem Abluftstrom vor dem Luft/Luftwärmeübertrager ein Bypass-Luftstrom abgezweigt wird, der dem Verdampfer mit einer Luft/Wasser-Wärmepumpe Wärmeenergie zuführt. Dies ist energie- und konstruktionsaufwändig.

Aufgabe der Erfindung ist es, eine Vorrichtung der eingangs genannten Art so zu verbessern, dass der Wärmeinhalt der aus der Schwimmhalle entnommenen Abluft bei geringem technischem Aufwand und ohne zusätzliche Energiezufuhr weitestgehend genutzt wird.

Diese Aufgabe wird erfindungsgemäß dadurch gelöst, dass von einem Abluftstrom vor dem Haupt-Luft/Luft-Wärmeübertrager ein Abluft-Bypass abgezweigt ist, der im kalten Teil des Luft/Luft-Wärmeübertragers auf der Fortluftseite mündet und von dem ein im Abluftbypass angeordneter Luft/Wasser- oder zweiter Luft/Luft-Wärmeübertrager durchströmbar ist, der so ausgebildet ist, dass durch ihn ein Fluid zu seiner Erwärmung strömt, dessen Wärmeinhalt innerhalb oder außerhalb der Schwimmhalle verwendbar ist.

Durch einen in dieser Weise den Luft/Luft-Wärmeübertrager teilweise oder vollständig überbrückenden Abluft-Bypass mit Luft/Wasser-Wärmeübertrager kann der Wärmeinhalt der Abluft fast vollständig genutzt werden. Das vom Luft/Wasser-Wärmeübertrager erwärmte Wasser kann für die verschiedensten Zwecke genutzt werden. Und dies bei geringem technischem Aufwand und ohne Einsatz einer Wärmepumpe.

Bei Einsatz eines hocheffizienten Wärmerückgewinnungssystems wird bei Betrieb unter den oben genannten besonderen Bedingungen einer Schwimmhallenklimatisierung durch eine Reduzierung des Abluftvolumenstroms um 10 bis 20 % die Wärmerückgewinnungsleistung (= Erwärmung der Außenluft) nur geringfügig reduziert. Diese 10 bis 20 % des Abluftvolumenstromes werden in einem Bypass am Ablufteintritt des Luft/Luft-Plattenwärmeübertragers vorbeigeführt und durchströmen einen auf diesen kleinen Teilvolumenstrom ausgelegten Wärmeübertrager insbesondere einen Luft/Wasser-Lamellenwärmeübertrager.

Vorzugsweise wird vorgeschlagen, dass das Fluid, das von im Bypass sitzenden Wärmeübertrager erwärmt wird, das Beckennachspeisewasser ist.

Es wird somit vorgeschlagen, das gemäß DIN 19643 je Badegast geforderte 30 Liter Frischwasser unter Nutzung der in der Abluft enthaltenen Wärme zu erwärmen und damit die Beckenwasserheizung zu entlasten. Das Temperaturniveau des für die Beckenwassererneuerung benutzten Trinkwassers beträgt normalerweise 10 bis 15°C. Dieses Temperaturniveau ermöglicht ohne Nutzung einer Wärmepumpe die Nutzung der in der 30°C warmen Abluft enthaltenen Wärmeenergie um das Nachspeisewasser bis auf 28°C zu erwärmen. In diesem im Abluft-Bypass sitzenden Luft/Wasser-Wärmeübertrager wird das Nachspeisewasser auf 28°C erwärmt und der Abluftstrom auf ca. 15°C ausgekühlt. Der ausgekühlte Teil des Abluftvolumenstromes wird erfindungsgemäß im kalten Teil des Luft/Luft-Plattenwärmeübertragers wieder beigemischt und kann dadurch bei entsprechend kalter Außenluft (<15°C) zusätzlich zur Erwärmung der Außenluft beitragen.

Von Vorteil ist, wenn der die Außenluft durch die Abluft erwärmende Haupt-Luft/Luft-Wärmeübertrager und/oder der im Abluft-Bypass angeordnete Wärmeübertrager ein Platten- oder Lamellen-Wärmeübertrager ist. Der genaue Aufbau und die Wirkungsweise eines solchen Lamellen-Gegenstrom-Luft/Luft-Wärmeübertragers ist in der deutschen Patentanmeldung DE 10 2009 033 157 A1 einschließlich der Vorteile beschrieben.

Hierbei kann der Haupt-Luft/Luft-Wärmeübertrager aus zwei oder mehr hintereinander geschalteten Luft/Luft-Wärmeübertrager bestehen, die alle von der Abluft und der Außenluft im Gegenstrom durchströmt sind, wobei der Abluft-Bypass in dem Luft/Luft-Wärmeübertrager mündet, der von der Außenluft zuerst durchströmt wird.

Für die Zeiträume, während dessen die zusätzlich aus der Abluft gewonnene Wärme nicht benötigt wird, z. B. im Ruhebetrieb, wird vorgeschlagen, dass der Abluft-Bypass durch eine manuelle oder automatische Klappe schließbar ist.

Vorzugsweise wird vorgeschlagen, dass der Luft/Luft-Wärmeübertrager und/oder der im Abluft-Bypass befindliche Wärmeübertrager im Gegenstrom zueinander parallel beabstandete Platten oder Lamellen aufweist, mit den Merkmalen
- dass abwechselnd durch die zwischen den Platten befindlichen, aufeinander folgenden Zwischenräume einmal das wärmeabgebende Fluid in einer Richtung und im benachbarten Zwischenraum das wärmeaufnehmende Fluid in entgegengesetzter Richtung strömt,
- dass die Zwischenräume in Teilbereichen in eine Vielzahl zueinander paralleler Strömungskanäle in Strömungsrichtung aufgeteilt sind,
- dass die Zwischenräume jeweils so aufgeteilt sind, dass ein erster Zwischenraumbereich als "Kanalbereich" in Kanäle aufgeteilt ist und ein zweiter Zwischenraumbereich als "kanalfreier Bereich" keine Kanäle aufweist,
- und dass in dem Bereich, in dem ein Zwischenraum einen Kanalbereich aufweist der benachbarte Zwischenraum einen kanalfreien Bereich besitzt und in dem Bereich, in dem ein Zwischenraum einen kanalfreien Bereich aufweist der benachbarte Zwischenraum einen Kanalbereich besitzt.

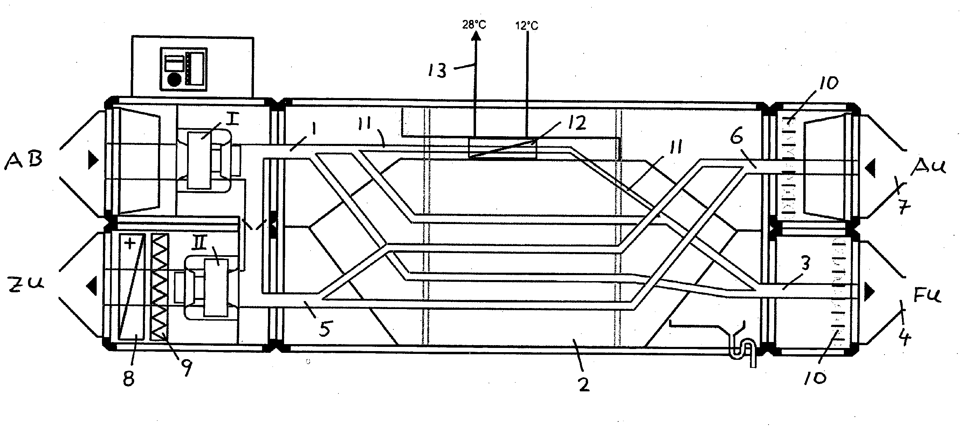

Ein Ausführungsbeispiel der Erfindung ist in der Zeichnung schematisch dargestellt und wird im Folgenden mit Alternativen und Erweiterungen beschrieben.

Zum Beheizen, Entfeuchten und Belüften einer Schwimmhalle wird das in der Zeichnung dargestellte Klimagerät verwendet, das die Abluft AB der Schwimmhalle durch einen Abluftventilator I absaugt und über mindestens eine Abluftleitung/-kanal 1 in den Haupt-Luft/Luft-Platten-Wärmeübertrager 2 führt, an dessen Ausgang die abgekühlte Abluft über mindestens eine Leitung/Kanal 3 nach außen als Fortluft FU über den Fortluftausgang 4 ausgebracht wird. Über einen Zuluftventilator II wird Zuluft ZU in die Schwimmhalle gefördert, die über eine/einen Zuluft-Leitung-/-kanal 5 durch den Luft/Luft-Wärmeübertrager 2 hindurchgesaugt wird, wobei hierzu der Luft/Luft-Wärmeübertrager 2 über eine/einen Leitung/Kanal 6 mit dem Außenluft AU Zugang 7 verbunden ist. Die warme Abluft AB und die kühle Außenluft AU strömen im Gegenstrom im Luft/Luft-Wärmeübertrager 2 aneinander vorbei, so dass die Abluft die Außenluft erwärmt.

In den erwähnten Luftströmen können noch mindestens ein Heizregister, eine Entfeuchtungsanlage 9 und Klappen 10 angeordnet sein, auf die hier nicht weiter eingegangen wird.

Von der Abluftleitung 1 zweigt zwischen dem Abluftventilator I und dem Luft/Luft-Wärmeübertrager 2 eine Abluft-Bypassleitung 11 ab, die im kalten bzw. kühlen Teil des Luft/Luft-Wärmeübertragers mündet. Alternativ - wird aber nicht beansprucht - kann die Bypassleitung 11 auch etwas später erst im warmen Teil des Luft/Luft-Wärmeübertragers 2 vom Abluftstrom abzweigen.

In der einen Teil der warmen Abluft führenden Bypassleitung 11 ist ein Wärmeübertrager 12 zwischengeschaltet, der ein Luft/Wasser-oder ein Luft/Luft-Gegenstrom-Wärmeübertrager ist und der von der durch den Bypass strömenden Abluft den Wärmeinhalt an eine Flüssigkeit oder an ein Gas abgibt, um die Wärme zu nutzen. Vorzugsweise ist er ein Luft/Wasser-Gegenstrom-Wärmeübertrager 12, der von dem Frischwasser durchströmt ist, das dem Schwimmbecken zugeführt und durch den Wärmeübertrager 12 von ca. 12°C auf ca. 28°C erwärmt wird. Der Wärmeinhalt der durch den Bypass strömenden Abluft kann aber auch für andere Zwecke genutzt werden.

Der Hauptwärmeübertrager 2 und/oder der im Bypass 11 befindliche Wärmeübertrager 12 sind vorzugsweise Platten- oder Lamellenwärmeübertrager, vorzugsweise in der in der deutschen Patentanmeldung DE 10 2009 033 157 A1 beschriebenen Bauweise.

Statt eines einzigen Luft/Luft-Wärmeübertragers 2 können auch zwei oder mehr hintereinander geschaltete Luft/Luft-Wärmeübertrager an dieser Stelle angeordnet werden, die alle von der Abluft und der Außenluft im Gegenstrom durchströmt sind, wobei der Abluft-Bypass 11 in dem Luft/Luft-Wärmeübertrager mündet, der von der Außenluft zuerst durchströmt wird. Ferner kann sich in der Bypassleitung 11 eine manuelle oder automatische Klappe befinden, um den Bypass schließen zu können, wenn diese zusätzliche Wärmeentnahme nicht benötigt wird, insbesondere in Ruhezeiten.

## Patentansprüche

1. Vorrichtung zum Klimatisieren einer Schwimmhalle mit mindestens einem Haupt- Luft/Luft-Wärmeübertrager (2), der dafür geeignet ist, den Wärmeinhalt einer der Schwimmhalle entnommenen, in einer Abluftleitung (1) geführten Abluft (AB) auf eine der Schwimmhalle von einer Leitung (6) zugeführte Außenluft (AU) zu übertragen, wobei die abgekühlte Abluft über mindestens eine Leitung (3) nach außen als Fortluft (FU) ausbringbar ist, und wobei von der Abluftleitung (1) vor dem Haupt- Luft/Luft-Wärmeübertrager ein Abluft-Bypass (11) abgezweigt ist, der einen Wärmeübertrager (12) aufweist, **dadurch gekennzeichnet, dass** der Abluft-Bypass (11) im kalten Teil des Haupt-Luft/Luft-Wärmeübertragers (2) auf der Fortluftseite mündet und dass der Abluft-Bypass (11) angeordnete Wärmeübertrager ein Luft/Wasser- oder Luft/Luft-Wärmeübertrager (12) ist, der von der abgezweigten Abluft im Abluft-Bypass durchströmbar und so ausgebildet ist, dass durch ihn ein Fluid zu seiner Erwärmung strömt, dessen Wärmeinhalt innerhalb oder außerhalb der Schwimmhalle verwendbar ist.

2. Vorrichtung nach Anspruch 1, **dadurch gekennzeichnet, dass** das Fluid, das vom im Abluft-Bypass (11) sitzenden Wärmeübertrager (12) erwärmbar ist, ein Beckennachspeisewasser (13) ist.

3. Vorrichtung nach Anspruch 1 oder 2, **dadurch gekennzeichnet, dass** der die Außenluft durch die Abluft erwärmende Haupt-Luft/Luft-Wärmeübertrager (2) und/oder der im Abluft-Bypass angeordnete Wärmeübertrager (12) ein Platten- oder Lamellen-Wärmeübertrager ist.

4. Vorrichtung nach einem der vorherigen Ansprüche, **dadurch gekennzeichnet, dass** der Haupt-Luft/Luft-Wärmeübertrager (2) aus zwei oder mehr hintereinander geschalteten Luft/Luft-Wärmeübertrager besteht, die alle von der Abluft und der Außenluft im Gegenstrom durchströmbar sind, wobei der Abluft-Bypass (11) in dem Luft/Luft-Wärmeübertrager mündet, der von der Außenluft zuerst durchströmbar ist.

5. Vorrichtung nach einem der vorherigen Ansprüche, **dadurch gekennzeichnet, dass** der Abluft-Bypass (11) durch eine manuelle oder automatische Klappe schließbar ist.

6. Vorrichtung nach einem der vorherigen Ansprüche, **dadurch gekennzeichnet, dass** der Luft/Luft-Wärmeübertrager (2) und/oder der im Abluft-Bypass (11) befindliche Wärmeübertrager (12) im Gegenstrom zueinander parallel beabstandete Platten oder Lamellen aufweist, mit den Merkmalen
- dass abwechselnd durch die zwischen den Platten befindliche, aufeinander folgende Zwischenräume einmal das wärmeabgebende Fluid in einer Richtung und im benachbarten Zwischenraum das wärmeaufnehmende Fluid in entgegengesetzter Richtung durchströmbar ist,
- dass die Zwischenräume in Teilbereichen in eine Vielzahl zueinander paralleler Strömungskanäle in Strömungsrichtung aufgeteilt sind,
- dass die Zwischenräume jeweils so aufgeteilt sind, dass ein erster Zwischenraumbereich als "Kanalbereich" in Kanäle aufgeteilt ist und ein zweiter Zwischenraumbereich als "kanalfreier Bereich" keine Kanäle aufweist,
- und dass in dem Bereich, in dem ein Zwischenraum einen Kanalbereich aufweist der benachbarte Zwischenraum einen kanalfreien Bereich besitzt und in dem Bereich, in dem ein Zwischenraum einen kanalfreien Bereich aufweist der benachbarte Zwischenraum einen Kanalbereich (3) besitzt.

## Claims

1. Device for air-conditioning an indoor swimming pool, having at least one main air/air heat exchanger (2), which is suitable for transferring the heat content of exhaust air (AB) extracted from an indoor swimming pool and conducted in an exhaust-air line (1) to outside air (AU) supplied to the indoor swimming pool by a line (6), wherein the cooled exhaust air is able to be discharged to the outside as outgoing air (FU) via at least one line (3), and wherein an exhaust-air bypass (11) is branched off from the exhaust-air line (1) in front of the main air/air heat exchanger (2) and has a heat exchanger (12), **characterized in that** the exhaust-air bypass (11) opens into the cold part of the main air/air heat exchanger (2) on the outgoing-air side, and **in that** the heat exchanger arranged in the exhaust-air bypass (11) is an air/water or air/air heat exchanger (12), which is able to be flowed through by the branched-off exhaust air in the exhaust-air bypass and is designed such that a fluid flows through it to be heated, the heat content of said fluid being able to be used inside or outside the indoor swimming pool.

2. Device according to Claim 1, **characterized in that** the fluid which is able to be heated by the heat exchanger (12) fitted in the exhaust-air bypass (11) is pool-replenishment water (13).

3. Device according to Claim 1 or 2, **characterized in that** the main air/air heat exchanger (2), which heats the outside air by way of the exhaust air, and/or the heat exchanger (12) which is arranged in the exhaust-air bypass are/is a plate-type or lamellar heat exchanger.

4. Device according to one of the preceding claims, **characterized in that** the main air/air heat exchanger (2) consists of two or more air/air heat exchangers which are arranged one behind the other and which are all able to be flowed through by the exhaust air and the outside air in a countercurrent flow configuration, wherein the exhaust-air bypass (11) opens into the air/air heat exchanger which is able to be flowed through first by the outside air.

5. Device according to one of the preceding claims, **characterized in that** the exhaust-air bypass (11) is able to be closed by a manual or automatic flap.

6. Device according to one of the preceding claims, **characterized in that** the air/air heat exchanger (2) and/or the heat exchanger (12) situated in the exhaust-air bypass (11) have/has plates or lamellae which are spaced apart parallel to one another in a countercurrent flow configuration, having the features
- that, in an alternating manner, through the successive intermediate spaces situated between the plates, the heat-releasing fluid is able to be made to flow through in one direction and, in the adjacent intermediate space, the heat-absorbing fluid is able to be made to flow through in the opposite direction,
- that the intermediate spaces, in sub-regions, are divided into a multiplicity of mutually parallel flow channels in the flow direction,
- that the intermediate spaces are each divided such that a first intermediate space region, as a "channel region", is divided into channels and a second intermediate space region, as a "channel-free region", has no channels,
- and that, in the region in which an intermediate space has a channel region, the adjacent intermediate space has a channel-free region, and, in the region in which an intermediate space has a channel-free region, the adjacent intermediate space has a channel region (3).

## Revendications

1. Dispositif de climatisation d'une salle de piscine, ledit dispositif comprenant au moins un échangeur de chaleur air/air principal (2) qui est apte à transférer le contenu thermique d'un air vicié (AB), pris dans la salle de piscine et guidé dans une conduite d'air évacué (1), dans l'air extérieur (AU) amené à la salle de piscine par une conduite (6), l'air vicié refroidi pouvant être évacué vers l'extérieur sous forme d'air d'échappement (FU) par le biais d'au moins une conduite (3), et une dérivation d'air vicié (11), qui comporte un échangeur de chaleur (12), étant bifurquée de la conduite d'air vicié (1) en amont de l'échangeur de chaleur air/air principal (2), **caractérisé en ce que** la dérivation d'air vicié (11) débouche dans la partie froide de l'échangeur de chaleur air/air principal (2) du côté de l'air d'échappement et **en ce que** l'échangeur de chaleur disposé dans la dérivation d'air vicié (11) est un échangeur de chaleur air/eau ou air/air (12) qui peut être traversé par l'air vicié bifurqué dans la dérivation d'air vicié et qui est conçu de manière à ce qu'un fluide, dont le contenu thermique peut être utilisé à l'intérieur ou à l'extérieur de la salle de piscine, traverse ledit échangeur pour le chauffer.

2. Dispositif selon la revendication 1, **caractérisé en ce que** le fluide, qui peut être chauffé par l'échangeur de chaleur (12) se trouvant dans la dérivation d'air vicié (11), est de l'eau d'alimentation secondaire de bassin (13).

3. Dispositif selon la revendication 1 ou 2, **caractérisé en ce que** l'échangeur de chaleur air/air principal (2) qui chauffe l'air extérieur par le biais de l'air vicié et/ou l'échangeur de chaleur (12) disposé dans la dérivation d'air vicié est un échangeur de chaleur à plaques ou à lamelles.

4. Dispositif selon l'une des revendications précédentes, **caractérisé en ce que** l'échangeur de chaleur air/air principal (2) comprend deux échangeurs de chaleur air/air ou plus montés en série, lesquels peuvent tous être traversés à contre-courant par l'air vicié et l'air extérieur, la dérivation d'air vicié (11) débouchant dans l'échangeur de chaleur air/air qui peut d'abord être traversé par l'air extérieur.

5. Dispositif selon l'une des revendications précédentes, **caractérisé en ce que** la dérivation d'air vicié (11) peut être fermée par un volet manuel ou automatique.

6. Dispositif selon l'une des revendications précédentes, **caractérisé en ce que** l'échangeur de chaleur air/air (2) et/ou l'échangeur de chaleur (12) se trouvant dans la dérivation d'air vicié (11) comportent des plaques ou des lamelles espacées parallèlement les unes aux autres à contre-courant, lesquels échangeurs présentent les caractéristiques suivantes
- le fluide dissipateur de chaleur peut s'écouler dans un sens alternativement à travers les interstices successifs ménagés entre les plaques et le fluide capteur de chaleur peut s'écouler dans le sens opposé dans l'espace intermédiaire adjacent,
- les espaces intermédiaires sont divisés dans des sous-zones dans la direction d'écoulement en une multitude de conduits d'écoulement parallèles les uns aux autres,
- les espaces intermédiaires sont chacun divisés de telle manière qu'une première zone d'espace intermédiaire en tant que « zone de conduit » soit divisée en conduits et une deuxième zone d'espace intermédiaire en tant que « zone sans conduit » ne comporte pas de conduit,
- et dans la zone dans laquelle un espace intermédiaire comporte une zone de conduits, l'espace intermédiaire adjacent possède une zone sans conduit et dans la zone dans laquelle un espace intermédiaire comporte une zone sans conduit, l'espace intermédiaire adjacent possède une zone de conduit (3).
